# EUROPÄISCHE PATENTANMELDUNG

(11) **EP 4 390 004 A1**
(43) Veröffentlichungstag der Anmeldung: **26.06.2024**
(21) Anmeldenummer: 23213972.5
(22) Anmeldetag: 04.12.2023
(51) Int. Cl.: E04D 1/30, F24S 25/61, H02S 20/23, E04D 13/12

(54) **DACHEINDECKUNGSPLATTE ZUR UNTERSTÜTZUNG EINES BEFESTIGUNGSELEMENTES**

(30) Priorität: 15.12.2022 DE 102022133506
(71) Anmelder: BMI Group Holdings UK Limited, Reading, Berkshire RG1 1LX (GB)
(72) Erfinder: Willen, Dirk, 65366 Geisenheim (DE); Cranfield, Benjamin Colin, Burgess Hill RH15 8UZ (GB); Harding, Thomas, Crawley RH11 9TS (GB); Klavsen, Jesper Buris, 7700 Thisted (DK); Kostadinov, Stoyan Georgiev, Pershore WR10 2AZ (GB); Leth, Christian, 9430 Vadum (DK); van Leeuwen, Johannes Cornelis, 3403 ZL IJsselstein (NL)
(74) Vertreter: Grundmann, Dirk

(57) **Zusammenfassung**

Die Erfindung betrifft eine Dacheindeckungsplatte, deren im verlegten Zustand nach außen weisende Oberseite einen in einem von zwei Wellentälern (12,13) flankierten Wellenberg (11) angeordneten abgeflachten Bereich (6) aufweist, der eine Stützstruktur zum Abstützen eines Befestigungselementes (22) zur Befestigung von Dachzubehör an einer Dachunterkonstruktion bildet. Um eine derartige Dacheindeckungsplatte (1) mit hakenförmigen Befestigungselementen verwenden zu können, wird vorgeschlagen, dass der abgeflachte Bereich (6) an einen firstseitigen Rand (2) der Dacheindeckungsplatte (1) angrenzt.

## Beschreibung

### Gebiet der Technik

Die Erfindung betrifft eine Dacheindeckungsplatte, deren im verlegten Zustand nach außen weisende Oberseite einen in einem von zwei Wellentälern flankierten Wellenberg angeordneten abgeflachten Bereich aufweist, der eine Stützstruktur zum Abstützen eines Befestigungselementes zur Befestigung von Dachzubehör an einer Dachunterkonstruktion bildet.

### Stand der Technik

Eine gattungsgemäße Dacheindeckungsplatte wird zusammen mit einem Befestigungselement, beispielsweise einem Haken, verwendet, um Dachzubehör, wie beispielsweise eine Tragvorrichtung für Solar-Paneele, am Dach zu befestigen. Das Befestigungselement wird an der Dachkonstruktion befestigt, in die die Kräfte abgeleitet werden sollen.

Aus dem Stand der Technik sind insbesondere Befestigungselemente vorbekannt, die unmittelbar an den Sparren der Dachunterkonstruktion befestigt werden müssen. Dies kann mittels Schrauben erfolgen. Ein Schenkel des Befestigungselementes muss die Dachhaut durchdringen. Hierzu müssen spezielle Dacheindeckungsplatten verwendet werden, die eine passende Öffnung aufweisen.

Eine Dacheindeckungsplatte mit einer Halterung für Dachzubehör ist beispielsweise aus der DE 41 04 157 C2 vorbekannt. Die Dacheindeckungsplatte besitzt eine wellenförmige Oberseite, die nach außen vom Dach weg weist, wobei eine Haltevorrichtung in einem Wellental angeordnet ist. Die Rückseite des Wellentals, die nach innen zum Dach weist, bildet eine sich in einer Ebene erstreckende Auflagezone aus, die auf einer Dachlatte aufliegen kann.

Die DE 10 2008 012 248 A1 beschreibt ein Gestell zur Aufdachmontage von plattenförmigen Bauelementen mit einer gattungsgemäßen Dacheindeckungsplatte, wobei eine mittlere Wölbung der Dacheindeckungsplatte eine Mulde mit einem abgeflachten Boden aufweist, auf dem ein Befestigungselement angeordnet ist, das durch eine Bohrung im Boden der Mulde mit einem darunterliegenden Verstärkungselement verbunden ist.

Ein an einer Dacheindeckungsplatte befestigbarer Haken ist bekannt aus der EP 1 856 323 B1, DE 100 51 335 A1 und der NL 2 018 345 B1.

Die DE 90 03 060 U1 beschreibt einen mittels eines Hakens an einer Dacheindeckungsplatte befestigbaren Dachtritt, der sich in Wellentälern einer Dacheindeckungsplatte abstützen kann.

Die US 2,367,318 A und die CN 201826442 U offenbaren Dacheindeckungsplatten mit nach außen weisenden Wölbungen, die bereichsweise abgeflacht sind.

### Zusammenfassung der Erfindung

Der Erfindung liegt die Aufgabe zugrunde, eine Dacheindeckungsplatte anzugeben, die mit einem hakenförmigen Befestigungselement derart zusammenwirken kann, dass eine von einem auf einem abgeflachten Bereich der Dacheindeckungsplatte aufliegenden Hakenschenkel in die Dacheindeckungsplatte eingeleitete Kraft in die Dachunterkonstruktion abgeleitet wird.

Gelöst wird die Aufgabe durch die in den Ansprüchen angegebene Erfindung, wobei die Unteransprüche nicht nur vorteilhafte Weiterbildungen der im Hauptanspruch angegebenen Erfindung sind, sondern auch eigenständige Lösungen der Aufgabe darstellen.

Zunächst und im Wesentlichen wird vorgeschlagen, dass der abgeflachte Bereich, der beim Stand der Technik vom Boden einer Mulde ausgebildet ist, an den firstseitigen Rand der Dacheindeckungsplatte angrenzt. Hierdurch wird eine konstruktive Möglichkeit geschaffen, dass sich auf dem abgeflachten Bereich ein Hakenschenkel eines hakenförmigen Befestigungselementes abstützen kann, das den firstseitigen Rand der Dacheindeckungsplatte umgreift. Der abgeflachte Bereich bildet eine Ebene, die unterhalb der Scheitellinie des Wellenberges verläuft, sodass sich im eingedeckten Dach zwischen der Unterseite des Wellenberges, der darüberliegenden Dacheindeckungsplatte und dem firstseitigen Rand der den Haken tragenden Dacheindeckungsplatte ein Tunnel ausbildet, durch den sich der auf dem abgeflachten Bereich aufliegende Hakenschenkel erstrecken kann. Gemäß einer bevorzugten Weiterbildung der Erfindung wird vorgeschlagen, dass der den Wellenberg ausbildenden, von der Dachunterkonstruktion wegweisenden Oberseite eine zur Dachunterkonstruktion weisende Unterseite gegenüberliegt, die unterhalb des abgeflachten Bereichs eine sich in einer Ebene erstreckende Auflagezone ausbildet. Mit dieser Auflagezone kann die Dacheindeckungsplatte auf eine Dachlatte aufgelegt werden. Die Breite der Auflagezone ist bevorzugt wesentlich größer, als die Breite des abgeflachten Bereichs, sodass die Flächenpressung auf die Dachlatte reduziert wird. Es ist ferner von Vorteil, wenn ein Abstand des abgeflachten Bereichs zur Auflagezone größer ist als ein Abstand eines der benachbarten Wellentäler zur Auflagezone. Bevorzugt ist der Abstand der Scheitel beider Wellentäler zur Auflagezone kleiner als der Abstand des abgeflachten Bereichs zur Auflagezone. Es ist ferner von Vorteil, wenn die Auflagezone von einer Rippenstruktur gebildet ist. Die Rippenstruktur kann sich kreuzende Querrippen und Längsrippen aufweisen. Die Dacheindeckungsplatte ist insbesondere aus Kunststoff oder aus Metall gefertigt. Die Rippen ragen von einer dünnen Deckwand nach unten ab, sodass durch die Breite der Rippen die oben genannten Abstände definiert sind. Sowohl unterhalb des abgeflachten Bereichs als auch unterhalb der Scheitel der Wellentäler erstrecken sich sich kreuzende Rippen. Die auf den abgeflachten Bereich aufgebrachte Kraft wird über die Schmalränder der Rippen kraftverteilt in die Dachunterkonstruktion abgeleitet. Es kann ferner vorgesehen sein, dass der abgeflachte Bereich von in Erstreckungsrichtung des Wellenberges verlaufenden Randrippen begrenzt ist. Dabei kann vorgesehen sein, dass im Bereich des traufseitigen Endes des abgeflachten Bereichs eine der Randrippen unterbrochen ist. Es bildet sich dort ein Freiraum, durch den beispielsweise Wasser ablaufen kann. Die Ebene, in der sich die Auflagezone erstreckt, kann parallel zur Ebene verlaufen, in der sich der abgeflachte Bereich erstreckt. Erfindungsgemäß ist aber vorgesehen, dass sich der abgeflachte Bereich in einer Stützebene erstreckt, die in Firstrichtung schräg auf eine von der Auflagezone gebildete Auflagefläche zuläuft. Der traufenseitige Rand der Unterseite der Dacheindeckungsplatte kann entlang einer Wellung verlaufen, sodass er berührend auf der Wellung der darunterliegenden Dacheindeckungsplatte aufliegen kann. Die Auflagezone kann sich bevorzugt über im Wesentlichen die gesamte Breite der Dacheindeckungsplatte erstrecken. Ferner kann sich an die Auflagezone ein nach unten abragender Steg anschließen. Der Steg bildet eine Anlagefläche zur Anlage an einer Dachlatte. Die ebene Fläche des abgeflachten Bereichs kann unter Ausbildung einer Stufe, die eine Rückwand des abgeflachten Bereichs bilden kann, in den gewölbten Bereich des Wellenberges übergehen. Die Rückwand besitzt eine bogenförmige Konturlinie. Es können ferner Bohrungen vorgesehen sein, durch die Befestigungsschrauben hindurchtreten können, mit denen die Dacheindeckungsplatte an einer Dachunterkonstruktion, beispielsweise an einer Dachlatte, befestigt werden kann. Die beiden Längsränder der Dacheindeckungsplatte, die quer zum firstseitigen Rand beziehungsweise quer zum traufseitigen Rand verlaufen, können einen nach oben und eine nach unten weisenden Falz besitzen. Diese Ränder treten in eine Überlappung mit Rändern benachbarter Dacheindeckungsplatten. In einer bevorzugten Ausgestaltung erstreckt sich der eine Stützstruktur ausbildende abgeflachte Bereich etwa mittig zwischen diesen beiden Längsrändern. Es kann ferner vorgesehen sein, dass sich die in einer ebenen Auflagefläche erstreckende Auflagezone zwischen einem unmittelbar dem firstseitigen Rand benachbarten Steg und der Rückwand des abgeflachten Bereichs erstreckt. Ein zwischen der Rückwand und dem traufseitigen Rand erstreckender Bereich der Unterseite der Dacheindeckungsplatte kann eine Höhlung ausbilden. Innerhalb der Höhlung können sich auch Versteifungsrippen befinden. Eine Querrippe der Auflagezone kann eine Wand der Höhlung ausbilden.

### Kurze Beschreibung der Zeichnungen

Die Erfindung wird nachfolgend anhand beigefügter Zeichnungen im Detail erläutert. Es zeigen:
- Fig. 1: eine Draufsicht auf eine Dacheindeckungsplatte 1,
- Fig. 2: eine Seitenansicht in Richtung des Pfeiles II in Figur 1 auf die Dacheindeckungsplatte 1,
- Fig. 3: eine Frontansicht in Richtung des Pfeiles III in Figur 1,

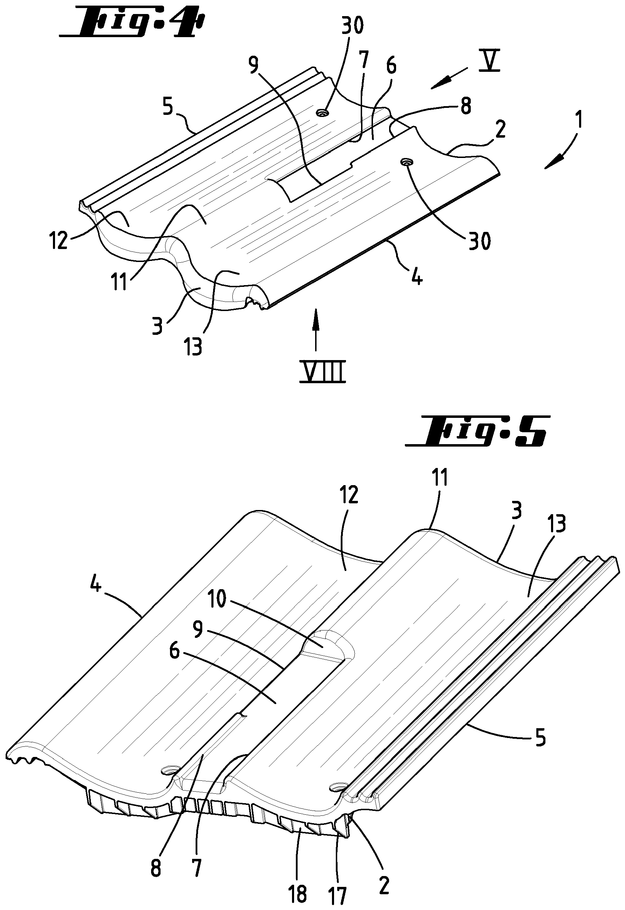

- Fig. 4: eine erste perspektivische Darstellung der Oberseite der Dacheindeckungsplatte 1,
- Fig. 5: eine zweite perspektivische Darstellung der Oberseite der Dacheindeckungsplatte 1,
- Fig. 6: eine Darstellung der in ein Dach eingebauten Dacheindeckungsplatte 1,
- Fig. 7: den Schnitt gemäß der Linie VII-VII in Figur 6,

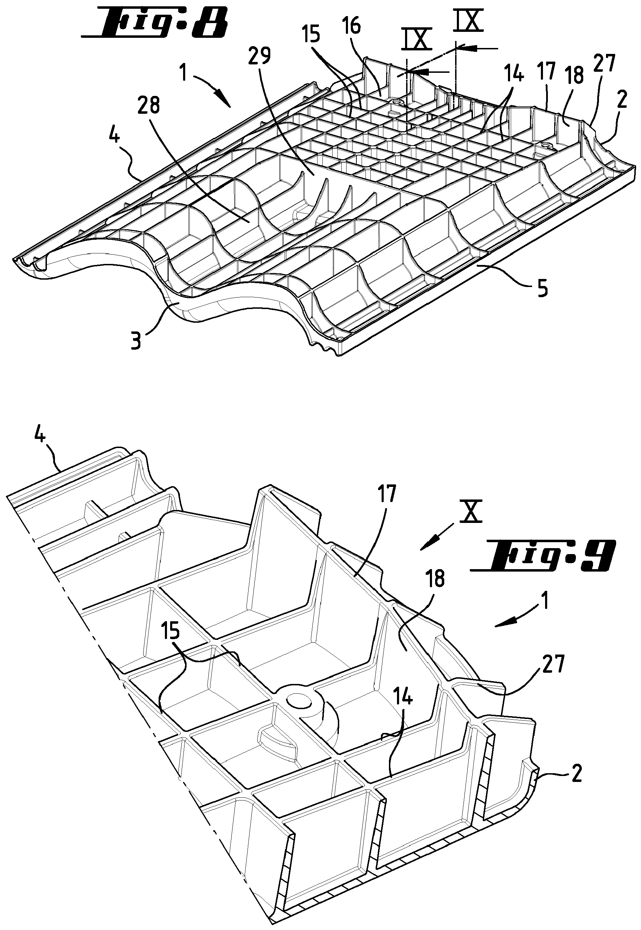

- Fig. 8: eine erste perspektivische Darstellung der Unterseite der Dacheindeckungsplatte 1,
- Fig. 9: eine zweite perspektivische Darstellung der Unterseite der Dacheindeckungsplatte 1 entlang der Schnittlinie IX-IX in Figur 8 und

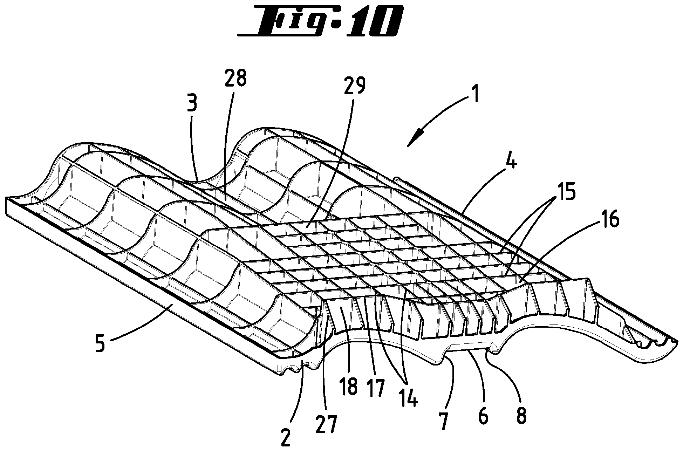

- Fig. 10: eine weitere perspektivische Schnittdarstellung der Unterseite der Dacheindeckungsplatte.

### Beschreibung der Ausführungsformen

Die in den Zeichnungen dargestellte Dacheindeckungsplatte wird zusammen mit weiteren Dacheindeckungsplatte 1' einer Dachhaut verwendet. Während die weiteren Dacheindeckungsplatten 1' aus einem keramischen Material, aus Beton oder aus einem anderen üblichen Material zur Fertigung von Dachpfannen ausgebildet sein können, ist die in den Zeichnungen dargestellte Dacheindeckungsplatte 1 bevorzugt aus Kunststoff oder Metall ausgebildet. Sie kann spritzgegossen werden oder gepresst werden.

Die Dacheindeckungsplatte 1 hat die Aufgabe, mit einem Befestigungselement 22 zusammenzuwirken, mit dem Dachzubehör, beispielsweise ein Traggerüst oder ein Tragrahmen für Solarpaneele an einer Dachunterkonstruktion befestigt werden können. Die Dacheindeckungsplatte 1 bildet hierzu eine Stützstruktur, mit der auf das Befestigungselement 22 von dem in den Zeichnungen nicht dargestellten Dachzubehör einwirkende Kräfte in die Dachunterkonstruktion abgeleitet werden können. Die Stützstruktur wird von einem abgeflachten Bereich 6 der Oberseite der Dacheindeckungsplatte 1 ausgebildet, auf der sich ein erster Schenkel 25 eines hakenförmigen Befestigungselementes 22 abstützen kann. Das Befestigungselement 22 besitzt einen Stützschenkel 26, der in etwa rechtwinklig vom ersten Hakenschenkel 25 abragt, der das Dachzubehör tragen kann.

An den ersten Hakenschenkel 25 schließt sich ein Hakensteg 24 an, der einen firstseitigen Rand 2 der Dacheindeckungsplatte 1 überfangen kann. An den Hakensteg 24 schließt sich wiederum ein zweiter Hakenschenkel 23 an, der eine Dachlatte 19 untergreifen kann, auf dem die Dacheindeckungsplatte 1 aufliegt. Die Hakenschenkel 23, 25 und der Hakensteg 24 können zusammen eine etwa U-förmige Klammer bilden, die sich beim Aufschieben der Dacheindeckungsplatte 1 auf die Dachlatte 19 aufweitet, wodurch der Hakenschenkel 23 durch die aus der Aufweitung der Klammer resultierende Rückstellkraft an die Dachlatte 19 und die Dacheindeckungsplatte 1 vom Hakenschenkel 25 an die Oberseite der Dachlatte 19 angepresst wird. Auf diese Weise ist die Dacheindeckungsplatte 1 schon fixiert, was die spätere Befestigung an der Dachlatte 19 erleichtert. Um ein Abrutschen des Befestigungselementes 22 von der Dachlatte 19 zu verhindern, kann der an der Dachlatte 19 anliegende Hakenschenkel 23 ein sägezahnförmiges Profil aufweisen. Die Länge des ersten Hakenschenkels 25 ist geringer, als die Länge des abgeflachten Bereichs 6, sodass zwischen dem Stützschenkel 26 und einer Rückwand 10 des abgeflachten Bereichs 6 ein Freiraum verbleibt.

Die Unterseite der Dacheindeckungsplatte 1 besitzt eine von Stützrippen ausgebildete Struktur, wobei die Schmalseiten der Stützrippen in einer Auflageebene verlaufen, mit der sich die Dacheindeckungsplatte 1 auf der Dachlatte 19 abstützen kann. Die bei Dacheindeckungsplatten zum Einhängen an der Dachlatte 19 übliche Einhängenase wird von einem Steg 17 gebildet. Der Steg 17 übergreift eine Schmalseite der Dachlatte 19 und er weist eine Anlagefläche 18 auf, die an der Schmalseite der Dachlatte 19 anliegt. Der Steg 17 ist dem gerundeten firstseitigen Rand 2 unmittelbar benachbart.

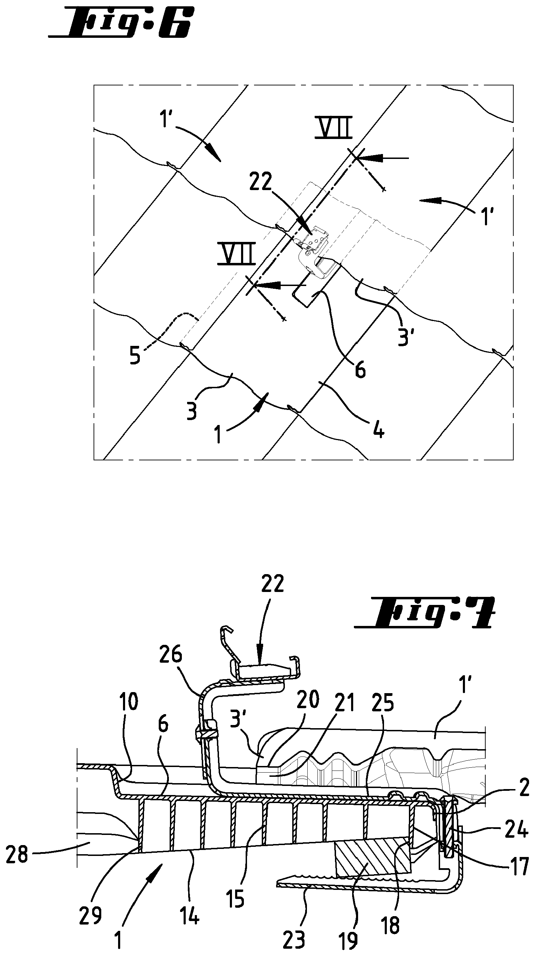

Die Dacheindeckungsplatte 1 besitzt einen firstseitigen Rand 2 und einen diesem gegenüberliegenden traufseitigen Rand 3. Zwischen diesen beiden Rändern 2, 3 erstrecken sich Längsränder 4, 5. Um die Kompatibilität der Dacheindeckungsplatte 1 mit den benachbarten herkömmlichen Dacheindeckungsplatten 1' herzustellen und eine wasserdichte Dachhaut zu erzielen, ist der Längsrand 4 als Deckfalz und der Längsrand 5 als Wasserfalz ausgebildet. Im eingebauten Zustand - siehe Figur 6 - wird der nach oben offene Wasserfalz am Längsrand 5 von einem nach unten offenen Deckfalz einer benachbarten Dacheindeckungsplatte 1' überfangen. Umgekehrt kann der Deckfalz am Längsrand 4 den nach oben offenen Wasserfalz einer benachbarten Dacheindeckungsplatten 1' überfangen.

Die beiden Längsränder 4, 5 grenzen unmittelbar jeweils an ein zwischen firstseitigem Rand 2 und traufseitigem Rand 3 verlaufenden Wellental 12, 13 an. Die Wellentäler 12, 13 erstrecken sich gleichförmig zwischen firstseitigem Rand 2 und traufseitigem Rand 3. Es sind zwei Bohrungen 30 innerhalb der Wellentäler 12, 13 vorgesehen, die dem firstseitigen Rand 2 benachbart sind. Mit die Bohrungen 30 durchgreifenden Befestigungsschrauben kann die Dacheindeckungsplatte 1 an der Dachlatte 19 befestigt werden.

Die Unterseite des traufseitigen Randes 2 verläuft entlang einer Wellenlinie, sodass sich der untere Rand an die Oberseite einer traufseitigen Dacheindeckungsplatte 1' anlegen kann. Unter einem zwischen den beiden Wellentälern 12, 13 verlaufenden Wellenberg 11 befindet sich eine Höhlung 28, die an eine Auflagezone 14 angrenzt, die sich in einer Ebene erstreckt.

Der Wellenberg 11 erstreckt sich über die gesamte Strecke zwischen firstseitigem Rand 2 und traufseitigem Rand 3. Ein eine Scheitellinie aufweisender gerundeter Kopfabschnitt des Wellenberges 11 erstreckt sich allerdings nur über die untere Hälfte des Wellenberges 11. Über die obere Hälfte des Wellenberges 11 erstreckt sich ein eine Stützstruktur ausbildender abgeflachter Bereich 6, der in einer Ebene verläuft. Die Anordnung des abgeflachten Bereichs 6 auf dem Wellenberg 11 ist besonders vorteilhaft, denn die Durchführung des Befestigungselementes 22 im Überdeckungsbereich zweier Dacheindeckungsplatten 1, 1' liegt damit in einem Bereich, der wenig mit Regenwasser beaufschlagt wird. Das auf der überdeckenden Dacheindeckungsplatte 1' auftreffende Regenwasser fließt in die Wellentäler ab und in den in First-Trauf-Linie liegenden Wellentälern der sich überdeckenden Dacheindeckungsplatten 1' zur Trauf hin ab. Es wird praktisch um den Wellenberg 11 mit dem abgeflachten Bereich 6 herumgeführt. Im Bereich 6 direkt auftreffendes Regenwasser kann über den zwischen der Randrippe 8 und der Rückwand 10 bestehenden Freiraum 9 zum Wellental 13 hin abfließen.

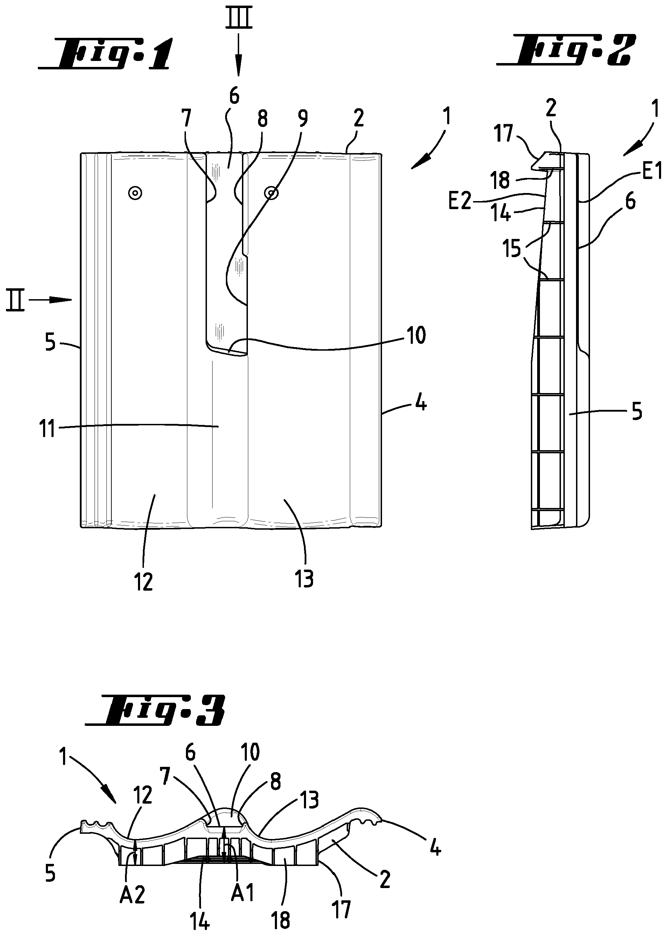

Der Figur 3 ist zu entnehmen, dass ein Abstand A1 des abgeflachten Bereich 6 zur Auflagezone 14 der Unterseite größer ist, als ein Abstand A2 einer Scheitellinie der Wellentäler 12, 13. Im Bereich der Auflagezone 14 erstrecken sich zwischen der Unterseite einer Wand des Wellentals 12,13 beziehungsweise des abgeflachten Bereichs 6 Querrippen 15 und Längsrippen 16, die eine sich kreuzende Rippenstruktur ausbilden. Die Schmalseiten der Längsrippen 16 und Querrippen 15 erstrecken sich in einer ebenen Auflageebene E2, die spitzwinklig zu einer Stützebene E1 verläuft, in der der abgeflachte Bereich 6 liegt. Die beiden Ebenen schneiden sich oberhalb des firstseitigen Randes 2 entlang einer Schnittlinie, die parallel zum firstseitigen Rand 2 beziehungsweise zur Erstreckungsrichtung der Dachlatte 19 verläuft.

Ein von der Unterseite der Dacheindeckungsplatte 1 abragender Steg 17 bildet die Anlagefläche 18 zur Anlage an der Dachlatte 19 aus. Dieser Steg 17 bildet eine der Querrippen aus. Zwischen dem Steg 17 und dem firstseitigen Rand 2 kann sich eine zusätzliche Längsrippe erstrecken, deren Schmalseite schräg verlaufen kann.

Die beiden sich zwischen firstseitigem Rand 2 und traufseitigem Rand 3 erstreckenden Längsränder des abgeflachten Bereichs 6 gehen in gewölbt verlaufende Abschnitte des Wellenbergs 11 über, welche wiederum in den Scheitel der Wellentäler übergehen. Entlang der Längsränder des abgeflachten Bereichs 6 erstrecken sich Randrippen 7, 8, wobei sich die Randrippe 7 von der Rückwand 10 bis zum firstseitigen Rand 2 erstreckt. Die Randrippe 8 erstreckt sich vom firstseitigen Rand 2 nur bis zu einem Abstand zur Rückwand 10. Zwischen Rückwand 10 und Randrippe 8 erstreckt sich ein Freiraum 9. Die Randrippen 7, 8 bilden randseitige Erhebungen des abgeflachten Bereichs 6. Der vom Scheitel des Wellentals 12,13 hin zum Wellenberg 11 ansteigende Flächenabschnitt der Oberseite geht knickstellenfrei in die gewölbte Randrippe 7, 8 über. Die Oberfläche setzt sich abfallend über eine Scheitellinie der Randrippe 7, 8 fort, um dann in den abgeflachten Bereich 6 auszulaufen.

Der abgeflachte Bereich 6 bildet, bezogen auf die Scheitel der Randrippen 7, 8, einen vertieften Bereich.

Es wird als vorteilhaft angesehen, dass sich zwischen der vom abgeflachten Bereich 6 gebildeten Stützstruktur zum Abstützen des Hakenschenkels 25 ein Kraftverteilvolumen ausbildet, mit dem in die Stützstruktur 6 eingeleitete Kräfte auf die Auflagezone 14 aufgeteilt werden. Anders als beim Stand der Technik ist keine Verstärkungsplatte erforderlich. Die Dacheindeckungsplatte 1 besitzt aufgrund des Kraftverteilvolumens und der das Kraftverteilvolumen ausbildenden Rippenstruktur eine ausreichende Steifigkeit, um Kräfte in die Dachlatte 19 und von dieser auf die Dachsparren abzuleiten. Da die Kraftübertragung von der Dacheindeckungsplatte 1 auf die Dachlatte 19 erfolgt, muss die Dacheindeckungsplatte 1 nicht über einem Dachsparren positioniert werden, damit das Befestigungselement 22 an diesem befestigt werden kann. Es ist also möglich, die Dacheindeckungsplatte 1 - in Anpassung an die jeweiligen baulichen Gegebenheiten - frei zwischen zwei benachbarten Dachsparren zu positionieren. Als Befestigungselement 22 kann ein Haken verwendet werden, der den vom firstseitigen Rand 2 gebildeten Kopf der Dacheindeckungsplatte 1 und die darunterliegende Dachlatte 19 überfangen kann. Es ist nicht erforderlich, dass das Befestigungselement 22 mit zusätzlichen Befestigungselementen an der Dachunterkonstruktion befestigt werden muss. Die Breite des Hakens beziehungsweise des Hakenschenkels 25 kann der Breite des abgeflachten Bereichs 6 entsprechen, sodass der Hakenschenkel 25 von den Randrippen 7, 6 gehalten wird. Der Hakenschenkel 25 kann an den Randrippen 7, 6 berührend anliegen. Die Fläche der Rückwand 10 spiegelt einen Freiraum wieder, der im Bereich des firstseitigen Randes 2 ein Durchtauchen des Hakenschenkels 15 ermöglicht. Die Oberseite des Hakenschenkels 15 liegt dann mit einem vertikalen Abstand zu einer Unterseite der darüberliegenden Dacheindeckungsplatte 1'. Im Gegensatz zum Stand der Technik ist es daher nicht mehr erforderlich, im firstseitigen Überdeckungsbereich zweier Dacheindeckungsplatten 1, 1' an der überdeckenden firstseitigen Dacheindeckungsplatte 1' die traufseitigen Fußrippen zu entfernen, um so im Überdeckungsbereich eine Durchführung für den Hakenteil 25 des Befestigungselements 22 herzustellen.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Eine Dacheindeckungsplatte, die dadurch gekennzeichnet ist, dass der abgeflachte Bereich 6 an einen firstseitigen Rand 2 der Dacheindeckungsplatte 1 angrenzt.

Eine Dacheindeckungsplatte, die dadurch gekennzeichnet ist, dass dem abgeflachten Bereich 6 der Oberfläche eine sich in einer Ebene erstreckende Auflagezone 14 der im verlegten Zustand nach innen weisenden Unterseite zur Auflage der Dacheindeckungsplatte 1 auf eine Dachlatte 19 der Dachunterkonstruktion gegenüberliegt.

Eine Dacheindeckungsplatte, die dadurch gekennzeichnet ist, dass ein Abstand A1 des abgeflachten Bereich 6 zur Auflagezone 14 größer ist als ein Abstand A2 der Scheitel der Wellentäler 12, 13 zur Auflagezone 14.

Eine Dacheindeckungsplatte, die dadurch gekennzeichnet ist, dass die Auflagezone 14 von einer Rippenstruktur 15, 16 gebildet ist.

Eine Dacheindeckungsplatte, die dadurch gekennzeichnet ist, dass die Auflagezone 14 sich kreuzende Querrippen 15 und Längsrippen 16 aufweist.

Eine Dacheindeckungsplatte, die dadurch gekennzeichnet ist, dass der abgeflachte Bereich 6 von in Erstreckungsrichtung des Wellenberges 11 verlaufenden Randrippen 7, 8 begrenzt ist.

Eine Dacheindeckungsplatte, die dadurch gekennzeichnet ist, dass eine der Randrippen 8 im Bereich des traufenseitigen Endes des abgeflachten Bereiches 6 unter Ausbildung eines Freiraums 9 unterbrochen ist.

Eine Dacheindeckungsplatte, die dadurch gekennzeichnet ist, dass der abgeflachte Bereich 6 sich in einer Stützebene erstreckt, die in Firstrichtung schräg auf eine von der Auflagezone 14 gebildete Auflagefläche zuläuft.

Eine Dacheindeckungsplatte, die dadurch gekennzeichnet ist, dass der traufseitige Rand 3 der Unterseite der Dacheindeckungsplatte 1 entlang einer Wellung verläuft, und/oder dass sich die in einer Ebene verlaufende Auflagezone 14 über im Wesentlichen die gesamte Breite der Dacheindeckungsplatte 1 erstreckt, und/ oder dass die Auflagezone 14 an einen Steg 17 angrenzt, der eine Anlagefläche 18 ausbildet zur Anlage an einer Dachlatte 19.

Eine Vorrichtung, die gekennzeichnet ist durch ein Befestigungselement 22, das einen sich auf dem abgeflachten Bereich 6 abstützenden ersten Hakenschenkel 25, einen den firstseitigen Rand 2 umfassenden Hakensteg 24 und einen die Unterseite der Dacheindeckungsplatte 1 untergreifenden zweiten Hakenschenkel 23 aufweist.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/ oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

### Liste der Bezugszeichen

| | | | |
|---|---|---|---|
| 1 | Dacheindeckungsplatte | 26 | Stützschenkel |
| 2 | firstseitiger Rand | 27 | Stützsteg |
| 3 | traufenseitiger Rand | 28 | Höhlung |
| 4 | falzüberdeckender Rand | 29 | Wand |
| 5 | falzseitiger Rand | 30 | Bohrung |
| 6 | abgeflachter Bereich | | |
| 7 | Randrippe | | |
| 8 | Randrippe | | |
| 9 | Freiraum | | |
| 10 | Rückwand | A1 | Abstand |
| 11 | Wellenberg | A2 | Abstand |
| 12 | Wellental | E1 | Stützebene |
| 13 | Wellental | E2 | Auflageebene |
| 14 | Auflagezone | | |
| 15 | Querrippe | | |
| 16 | Längsrippe | | |
| 17 | Steg | | |
| 18 | Anlagefläche | | |
| 19 | Dachlatte | | |
| 20 | Randkante | | |
| 21 | Freiraum | | |
| 22 | Befestigungselement | | |
| 23 | Hakenschenkel | | |
| 24 | Hakensteg | | |
| 25 | Hakenschenkel | | |

## Patentansprüche

1. Dacheindeckungsplatte (1), deren im verlegten Zustand nach außen weisende Oberseite einen in einem von zwei Wellentälern (12, 13) flankierten Wellenberg (11) angeordneten abgeflachten Bereich (6) aufweist, der eine Stützstruktur zum Abstützen eines Befestigungselementes (22) zur Befestigung von Dachzubehör an einer Dachunterkonstruktion bildet, **dadurch gekennzeichnet, dass** der abgeflachte Bereich (6) an einen firstseitigen Rand (2) der Dacheindeckungsplatte (1) angrenzt.

2. Dacheindeckungsplatte (1) nach Anspruch 1, **dadurch gekennzeichnet, dass** dem abgeflachten Bereich (6) der Oberfläche eine sich in einer Ebene erstreckende Auflagezone (14) der im verlegten Zustand nach innen weisenden Unterseite zur Auflage der Dacheindeckungsplatte (1) auf eine Dachlatte (19) der Dachunterkonstruktion gegenüberliegt.

3. Dacheindeckungsplatte (1) nach Anspruch 2, **dadurch gekennzeichnet, dass** ein Abstand (A1) des abgeflachten Bereich (6) zur Auflagezone (14) größer ist als ein Abstand (A2) der Scheitel der Wellentäler (12, 13) zur Auflagezone (14).

4. Dacheindeckungsplatte (1) nach einem der vorhergehenden Ansprüche, **dadurch gekennzeichnet, dass** die Auflagezone (14) von einer Rippenstruktur (15, 16) gebildet ist.

5. Dacheindeckungsplatte (1) nach Anspruch 4, **dadurch gekennzeichnet, dass** die Auflagezone (14) sich kreuzende Querrippen (15) und Längsrippen (16) aufweist.

6. Dacheindeckungsplatte (1) nach einem der vorhergehenden Ansprüche, **dadurch gekennzeichnet, dass** der abgeflachte Bereich (6) von in Erstreckungsrichtung des Wellenberges (11) verlaufenden Randrippen (7, 8) begrenzt ist.

7. Dacheindeckungsplatte (1) nach Anspruch 6, **dadurch gekennzeichnet, dass** eine der Randrippen (8) im Bereich des traufenseitigen Endes des abgeflachten Bereiches (6) unter Ausbildung eines Freiraums (9) unterbrochen ist.

8. Dacheindeckungsplatte (1) nach einem der vorhergehenden Ansprüche, **dadurch gekennzeichnet, dass** der abgeflachte Bereich (6) sich in einer Stützebene erstreckt, die in Firstrichtung schräg auf eine von der Auflagezone (14) gebildete Auflagefläche zuläuft.

9. Dacheindeckungsplatte (1) nach einem der vorhergehenden Ansprüche, **dadurch gekennzeichnet, dass** der traufseitige Rand (3) der Unterseite der Dacheindeckungsplatte (1) entlang einer Wellung verläuft

10. Dacheindeckungsplatte (1) nach einem der vorhergehenden Ansprüche, **dadurch gekennzeichnet, dass** sich die in einer Ebene verlaufende Auflagezone (14) über im Wesentlichen die gesamte Breite der Dacheindeckungsplatte (1) erstreckt.

11. Dacheindeckungsplatte (1) nach einem der vorhergehenden Ansprüche, **dadurch gekennzeichnet, dass** die Auflagezone (14) an einen Steg (17) angrenzt, der eine Anlagefläche (18) ausbildet zur Anlage an einer Dachlatte (19).

12. Vorrichtung zur Befestigung von Dachzubehör an einer Dachunterkonstruktion mit einer Dacheindeckungsplatte (1) nach einem der vorhergehenden Ansprüche, **gekennzeichnet durch** ein Befestigungselement (22), das einen sich auf dem abgeflachten Bereich (6) abstützenden ersten Hakenschenkel (25), einen den firstseitigen Rand (2) umfassenden Hakensteg (24) und einen die Unterseite der Dacheindeckungsplatte (1) untergreifenden zweiten Hakenschenkel (23) aufweist.

13. Dacheindeckungsplatte oder Vorrichtung, **gekennzeichnet durch** eines oder mehrere der kennzeichnenden Merkmale eines der vorhergehenden Ansprüche.
